# EUROPEAN PATENT APPLICATION

(11) **EP 4 016 281 A1**
(43) Date of publication of application: **22.06.2022**
(21) Application number: 21207651.7
(22) Date of filing: 10.11.2021
(51) Int. Cl.: G06F 7/499, G06F 7/74

(54) **ARITHMETIC PROCESSING DEVICE, ARITHMETIC PROCESSING METHOD, AND ARITHMETIC PROCESSING PROGRAM**

(30) Priority: 15.12.2020 JP 2020207436
(71) Applicant: FUJITSU LIMITED, Kawasaki-shi, Kanagawa 211-8588 (JP)
(72) Inventor: ITO, Makiko, Kawasaki-shi, 211-8588 (JP)
(74) Representative: Haseltine Lake Kempner LLP

(57) **Abstract**

An arithmetic processing device includes an arithmetic unit that executes an operation of fixed-point number data; a statistics acquisition unit that acquires statistical information that indicates a distribution of positions of most significant bits of a plurality of fixed-point number data obtained by the operation; an update unit that updates, based on the statistical information, a range for restriction of bit width of the plurality of fixed-point number data to be used for the operation; a compression method determination unit that estimates respective data amount after compression of the plurality of fixed-point number data by a plurality of compression methods based on the statistical information, and determine a compression method by which data amount after compression of the plurality of fixed-point number data is minimum among plurality of compression methods; and a memory interface that transfers the plurality of fixed-point number data compressed by the compression method to a memory.

## Description

### FIELD

The embodiments discussed herein are related to an arithmetic processing device, an arithmetic processing method, and an arithmetic processing program.

### BACKGROUND

To improve recognition performance of deep neural networks (hereinafter also referred to as DNN), learning data used for learning DNN tends to increase. With the increase in the learning data, a band width of a memory bus that connects a computer that executes learning and a memory that stores data used for learning tends to increase. Therefore, a method of reducing the band width of the memory bus by compressing the data used for learning has been proposed. For data compression, a flag indicating "0" or "non-0" is provided for each byte of uncompressed data, and the data compression is conducted by truncating a predetermined bit of the "non-0" data such that the "non-0" data falls in a compressed data size.

Furthermore, a method of improving the accuracy of learning while reducing the data amount by updating a decimal point position on the basis of a distribution of bit positions of fixed-point number data obtained by an operation using the fixed-point number data for DNN learning or the like has been proposed. Moreover, a method of reducing the number of acquisition units and the number of signal wirings to reduce a circuit scale by acquiring an operation result from a set of operators in order in the case of calculating the distribution of bit positions of the fixed-point number data has been proposed.

Japanese National Publication of International Patent Application No. 2020-517014, Japanese Laid-open Patent Publication No. 2018-124681, and International Publication Pamphlet No. WO 2020/084723 are disclosed as related art.

### SUMMARY

### [TECHNICAL PROBLEM]

In DNN learning, an operation for a large amount of data is executed, and characteristics (distribution, value, and the like) of the data used for learning such as data obtained by the operation change each time. Even when the decimal point position is updated on the basis of the distribution of bit positions of the fixed-point number data obtained by the operation, the characteristics of the data used for learning change each time. Therefore, in the case of compressing the data used for learning by a specific compression method, the compression efficiency may vary according to the characteristics of the data. In the case of a decrease in the compression efficiency, data transfer time to the memory increases and learning time increases.

### [SOLUTION TO PROBLEM]

In one aspect, the present embodiment aims to reduce the learning time by improving the compression efficiency of data used for learning a deep neural network to be transferred to a memory.

According to an aspect of the embodiments, an arithmetic processing device includes an arithmetic unit that executes an operation of fixed-point number data; a statistics acquisition unit that acquires statistical information that indicates a distribution of positions of most significant bits of a plurality of fixed-point number data obtained by the operation; an update unit that updates, based on the statistical information, a range for restriction of bit width of the plurality of fixed-point number data to be used for the operation; a compression method determination unit that estimates respective data amount after compression of the plurality of fixed-point number data by a plurality of compression methods based on the statistical information, and determine a compression method by which data amount after compression of the plurality of fixed-point number data is minimum among plurality of compression methods; and a memory interface that transfers the plurality of fixed-point number data compressed by the compression method to a memory.

### [ADVANTAGEOUS EFFECTS OF INVENTION]

By improving the compression efficiency of data used for learning a deep neural network to be transferred to a memory, the learning time can be reduced.

### BRIEF DESCRIPTION OF DRAWINGS

The invention is described, by way of example only, with reference to the following drawings, in which:
FIG. 1 is a block diagram illustrating an example of an arithmetic processing device according to an embodiment;
FIG. 2 is a block diagram illustrating an example of a server on which the arithmetic processing device of FIG. 1 is mounted;
FIG. 3 is an explanatory diagram illustrating an outline of DNN learning by the server of FIG. 2;
FIG. 4 is an explanatory diagram illustrating an example of updating a decimal point position of fixed-point number data during learning by the server of FIG. 2;
FIG. 5 is an explanatory diagram illustrating an example of data distribution in a layer in which many of operation results are "0" in the DNN learning by the arithmetic processing device of FIG. 1;
FIG. 6 is an explanatory diagram illustrating an example of a compression method of data to be compressed by a compression/decompression unit of FIG. 1;
FIG. 7 is an explanatory diagram illustrating another example of the compression method of data to be compressed by the compression/decompression unit of FIG. 1;
FIG. 8 is an explanatory diagram illustrating still another example of the compression method of data to be compressed by the compression/decompression unit of FIG. 1;
FIG. 9 is a flowchart illustrating an example of DNN learning by the server of FIG. 2;
FIG. 10 is a flowchart illustrating an example of mini-batch learning executed in step S400 of FIG. 9;
FIG. 11 is a flowchart illustrating an example of a determination method for a compression method executed in step S600 of FIG. 9;
FIG. 12 is a flowchart illustrating an example of a method of predicting a compression data amount executed in step S620 of FIG. 11;
FIG. 13 is an explanatory diagram illustrating an example of the compression data amount calculated for each digit in a case of predicting the compression data amount in each region of FIG. 12; and
FIG. 14 is a block diagram illustrating an example of an arithmetic processing device according to another embodiment.

### DESCRIPTION OF EMBODIMENTS

Hereinafter, embodiments will be described with reference to the drawings. Hereinafter, a signal line in which information such as a signal is transmitted is given a reference sign that is the same as a name of the signal. Furthermore, the signal line illustrated by a single line in the drawings may be a plurality of bits.

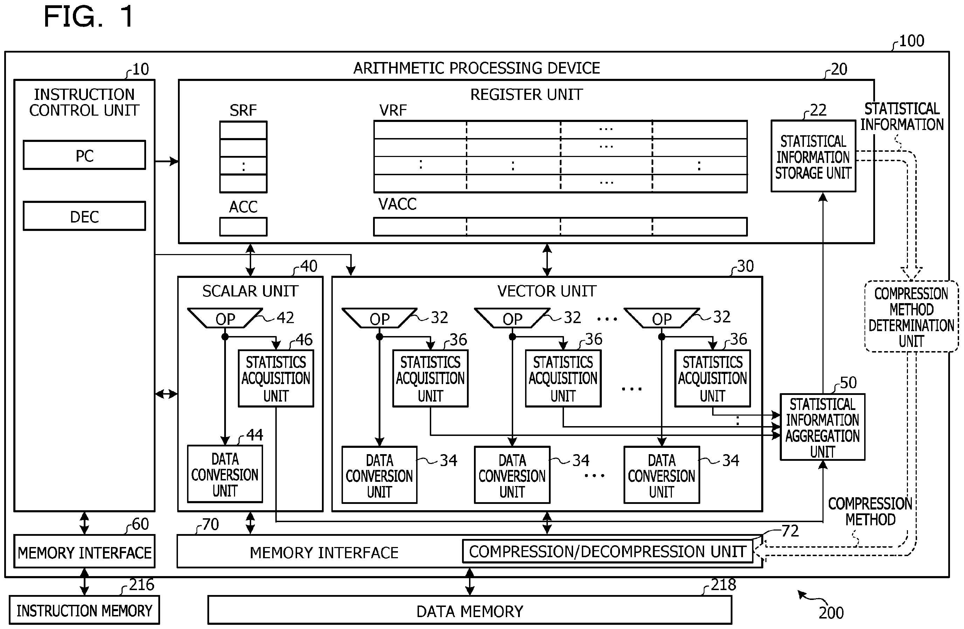

FIG. 1 illustrates an example of an arithmetic processing device according to an embodiment. The arithmetic processing device 100 illustrated in FIG. 1 includes an instruction control unit 10, a register unit 20, a vector unit 30, a scalar unit 40, a statistical information aggregation unit 50, and memory interfaces 60 and 70. The arithmetic processing device 100 is a processor such as a central processing unit (CPU). The instruction control unit 10 is connected to the instruction memory 216 via the memory interface 60. The vector unit 30 and the scalar unit 40 are connected to the data memory 218 via the memory interface 70. For example, the memory interfaces 60 and 70 are memory access controllers. Note that the memory interface 70 includes a compression/decompression unit 72.

The instruction control unit 10 includes a program counter PC, an instruction decoder DEC, and the like. The instruction control unit 10 fetches an instruction from the instruction memory 216 on the basis of an address indicated by the program counter PC, and supplies the fetched instruction to the instruction decoder DEC. The instruction decoder DEC decodes the fetched instruction and issues a decode result to the register unit 20, the vector unit 30, and the scalar unit 40. The register unit 20, the vector unit 30, and the scalar unit 40 function as an arithmetic unit that execute the instruction decoded by the instruction decoder DEC. Note that the instruction control unit 10 may have an instruction buffer or an instruction cache for prefetching the instruction.

The register unit 20 includes a vector register file VRF including a plurality of vector registers used by the vector unit 30, and a plurality of vector accumulators VACC corresponding to a predetermined number of vector registers. Furthermore, the register unit 20 includes a scalar register file SRF including a plurality of scalar registers used by the scalar unit 40, and a scalar accumulator ACC. Hereinafter, various registers in the register unit 20 are also simply referred to as registers.

Moreover, the register unit 20 includes a statistical information storage unit 22. The statistical information storage unit 22 stores statistical information acquired by the statistical information aggregation unit 50. For example, the statistical information is frequency distribution data illustrating a distribution of positions of most significant bits of each of operation result data (fixed-point number data) in the vector unit 30 or the scalar unit 40, and information indicating the positions of the most significant bits for obtaining the frequency distribution data.

The vector unit 30 includes, for example, an 8-element arithmetic unit. The vector unit 30 has a function to execute an integer operation, a product-sum operation using a vector accumulate register, and the like. Furthermore, the vector unit 30 executes clearing of the vector accumulate register, product-sum operation (multiply-accumulate (MAC)), cumulative addition, transfer of data to the vector register, and the like. Moreover, the vector unit 30 loads data from the data memory 218 and stores data in the data memory 218.

Each arithmetic unit of the vector unit 30 includes an integer operator (OP) 32, a data conversion unit 34, and a statistics acquisition unit 36. The data conversion unit 34 and the statistics acquisition unit 36 are provided for each integer operator 32. The integer operator 32 is an example of an arithmetic unit, and the data conversion unit 34 is an example of an update unit. Note that the function of the data conversion unit 34 may be included in the integer operator 32.

For example, the vector unit 30 inputs the data stored in the vector register and executes operations in parallel in the integer operators 32 of the 8-element arithmetic unit. Then, the vector unit 30 stores output data that is an operation result in the vector register. Furthermore, the vector unit 30 executes the product-sum operation in each of the 8-element integer operators 32, and stores each of the cumulative addition values of the product-sum operation results in the vector accumulator VACC.

For example, the integer operator 32 is an 8-bit operator. The integer operator 32 can execute not only the 8-bit data operation but also two 4-bit data parallel operations and four 2-bit data parallel operations. Since each data contains a sign bit, a bit number representing a data value used in an operation is one bit less than the bit number of the data. Note that the integer operator 32 may be a 16-bit operator. In this case, the integer operator 32 may cause the 16-bit operator to function as two 8-bit operators.

The scalar unit 40 includes an integer operator (OP) 42, a data conversion unit 44, and a statistics acquisition unit 46. The integer operator 42 is an example of an arithmetic unit, and the data conversion unit 44 is an example of an update unit. Note that the function of the data conversion unit 44 may be included in the integer operator 42. The scalar unit 40 has a function to execute a four-rule operation, a shift operation, a branch instruction, a load instruction, a store instruction, and the like. The scalar unit 40 executes operations using the scalar register and the scalar accumulator ACC.

For example, the integer operator 42 calculates input data stored in any of the scalar registers, and stores output data that is an operation result in the scalar register. In the case of executing a product-sum operation, the integer operator 42 stores a product-sum operation result in the scalar accumulator ACC. The operation result by the scalar unit 40 is stored in one of the scalar register, the scalar accumulator ACC, or the data memory 218. For example, the integer operator 42 may be an 8-bit arithmetic unit or a 16-bit arithmetic unit, like the integer operator 32. Note that the bit number of the integer operators 32 and 42 is not limited to 8 bits or 16 bits.

Each data conversion unit 34 receives fixed-point number data (operation result data) output from the integer operator 32 on the basis of an operation instruction. Each data conversion unit 34 extracts data having a predetermined bit number (bit width) from the received fixed-point number data on the basis of bit width information. At this time, each data conversion unit 34 executes saturation processing for upper-side bits to overflow and rounding processing for lower-side bits to underflow.

For example, each data conversion unit 34 converts the 24-bit fixed-point number data, which is the bit width of the output data of the integer operator 32, into 8-bit fixed-point number data, which is the bit width of the input data of the integer operator 32. Then, each data conversion unit 34 stores the fixed-point number data with a changed bit position in the register unit 20.

The function of the data conversion unit 44 is similar to the function of the data conversion unit 34. That is, the data conversion unit 44 changes the bit position (bit range) by selecting, on the basis of the bit width information, data of a predetermined bit number (bit width) from the fixed-point number data (operation result data) output from the integer operator 42 on the basis of the operation instruction. At this time, the data conversion unit 44 executes the saturation processing and the rounding processing.

For example, the data conversion unit 44 converts the 24-bit fixed-point number data, which is the bit width of the output data of the integer operator 42, into 8-bit fixed-point number data, which is the bit width of the input data of the integer operator 42. Then, the data conversion unit 44 stores the fixed-point number data with a changed bit position in the register unit 20.

Each statistics acquisition unit 36 receives the fixed-point number data (operation result data) output from the integer operator 32 on the basis of the operation instruction. Each statistics acquisition unit 36 acquires, for example, the position of the most significant bit of the received fixed-point number data, and outputs position information indicating the acquired position of the most significant bit to the statistical information aggregation unit 50.

The statistics acquisition unit 46 receives the fixed-point number data (operation result data) output from the integer operator 42 on the basis of the operation instruction. The statistics acquisition unit 46 acquires the position of the most significant bit of the received fixed-point number data, and outputs position information indicating the acquired position of the most significant bit to the statistical information aggregation unit 50.

Note that each of the statistics acquisition units 36 and 46 may acquire the position information indicating the position of the most significant bit of the operation result data and output the acquired position information to the statistical information aggregation unit 50 only in the case where the decode result of the instruction by the instruction decoder DEC includes an instruction of acquisition of statistical information. Furthermore, one data conversion unit 34 and one statistics acquisition unit 36 may be provided in common to the plurality of integer operators 32. In this case, the statistics acquisition unit 36 acquires the position of the most significant bit of the fixed-point number data output from each of the plurality of integer operators 32.

Here, the position of the most significant bit acquired by each of the statistics acquisition units 36 and 46 is an upper-side bit position where "1" first appears in the case where the sign bit is "0" (data is a positive value). Furthermore, the position of the most significant bit is an upper-side bit position where "0" first appears in the case where the sign bit is "1" (data is a negative value).

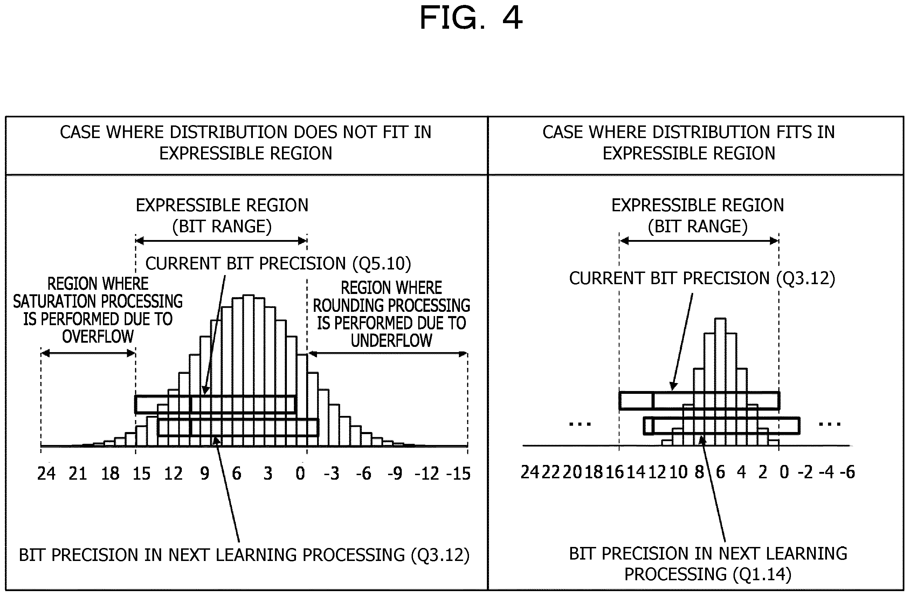

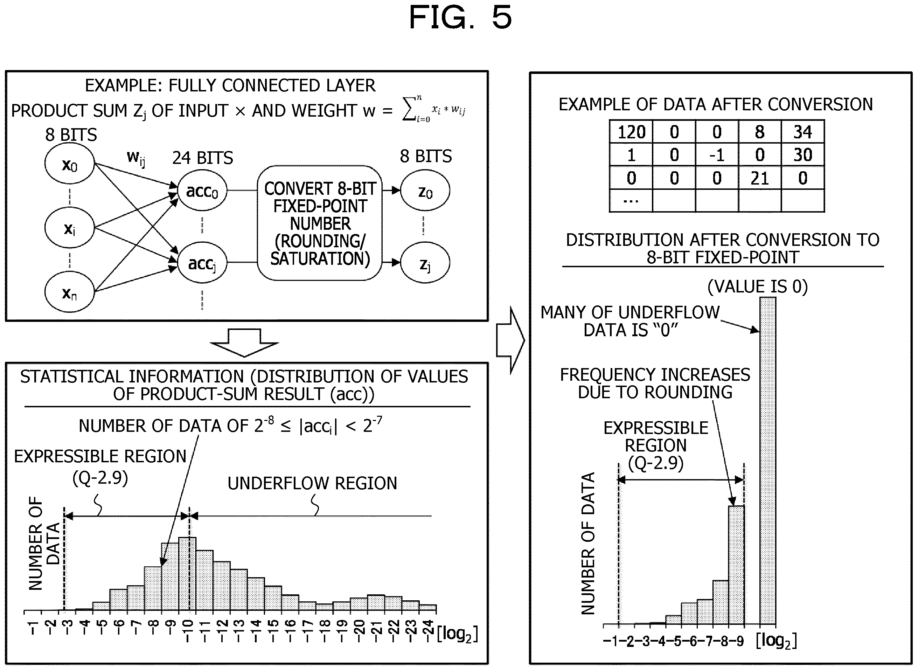

The statistical information aggregation unit 50 aggregates the position information indicating the position of the most significant bit received from the statistics acquisition units 36 and 46 to generate statistical information, and stores the generated statistical information in the statistical information storage unit 22. Then, as described above, the statistical information storage unit 22 stores the frequency distribution data indicating the distribution of the positions of the most significant bits of each of the operation result data (fixed-point number data). Examples of the statistical information aggregated by the statistical information aggregation unit 50 and stored in the statistical information storage unit 22 are described with reference to FIGs. 4 and 5.

In this embodiment, the compression/decompression unit 72 of the memory interface 70 compresses the fixed-point number data output from the register unit 20 on the basis of a compression method notified from a higher-level computer or the like that controls the arithmetic processing device 100, for example. Then, the compression/decompression unit 72 stores the compressed fixed-point number data in the data memory 218 (external memory). Here, the fixed-point number data output from the register unit 20 is the fixed-point number data with a changed bit position, which is output from the data conversion units 34 and 44 and stored in the register unit 20, and is, for example, middle layer data of training the deep neural network.

Furthermore, the compression/decompression unit 72 decompresses the compressed fixed-point number data read from the data memory 218, and stores the decompressed fixed-point number data in the register unit 20 or the like for use in DNN learning. By compressing the middle layer data of DNN training and storing the compressed data in the data memory 218, and decompressing the data read from the data memory 218 to the original data, a data transfer amount can be reduced as compared with a case where the data transfer amount to the data memory 218 is not compressed.

As a result, the time needed for data transfer between the register unit 20 and the data memory 218 can be shortened. Therefore, even in a case where a memory access speed is lower than an operation speed and a wait time occurs in the operator in DNN learning, the wait time can be reduced, the operation efficiency is improved, and the learning time can be shortened. For example, as an example in which the memory access speed is significantly lower than the operation speed in DNN learning, there is a layer that executes an operation for each element of a data array, or the like.

Moreover, by providing the compression/decompression unit 72 in the memory interface 70 located near the data memory 218, both the operation result data output from the vector unit 30 and the operation result data output from the scalar unit 40 can be compressed. Furthermore, the compression/decompression unit 72 can be mounted in the arithmetic processing device 100 without separating the unit into a compression unit and a decompression unit. As a result, a wiring region such as data lines related to data compression and decompression can be minimized, and a circuit scale of the arithmetic processing device 100 can be minimized.

The higher-level computer (computer) or the like or the arithmetic processing device 100 may include a compression method determination unit that estimates data amounts after compression of the operation result data by a plurality of compression methods, and determine the compression method with a minimum data amount on the basis of the statistical information stored in the statistical information storage unit 22. In this case, the compression/decompression unit 72 compresses the operation result data and decompresses the compressed operation result data by the compression method instructed by the compression method determination unit.

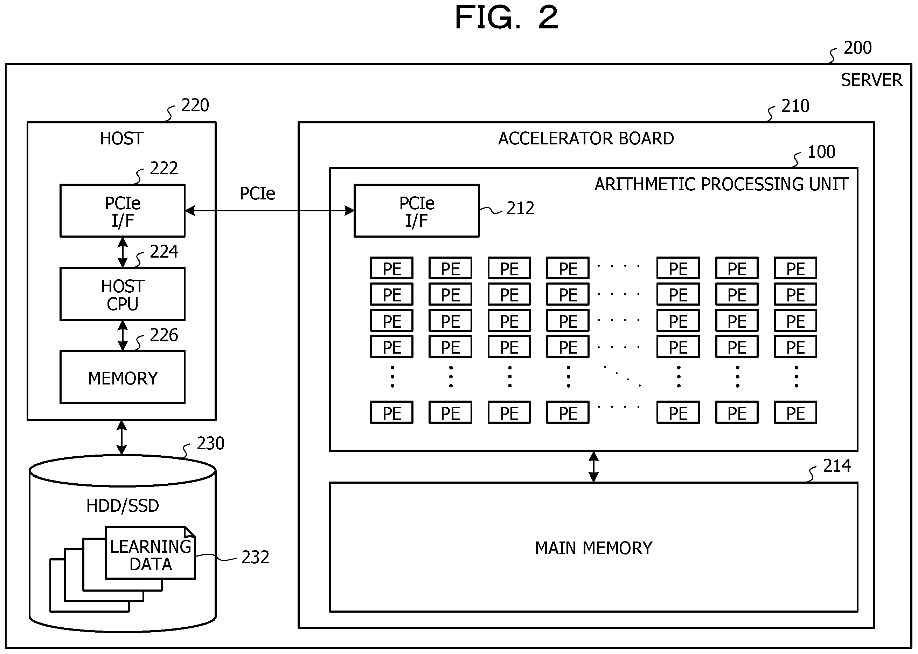

FIG. 2 illustrates an example of a server 200 on which the arithmetic processing device 100 of FIG. 1 is mounted. The server 200 on which the arithmetic processing device 100 is mounted is a computer that functions as an information processing device or an arithmetic processing device that executes DNN learning.

The server 200 includes an accelerator board 210 on which the arithmetic processing device 100 and a main memory 214 are mounted, a host 220, and a storage 230. The arithmetic processing device 100 and the host 220 are connected to each other by a communication bus such as a peripheral component interconnect express (PCIe) bus. Therefore, the arithmetic processing device 100 includes a PCIe interface (I/F) circuit 212, and the host 220 includes a PCIe interface (I/F) circuit 222.

The arithmetic processing device 100 includes a plurality of processing units PE (processing element) arranged in a matrix manner. For example, each processing unit PE is an arithmetic unit including the integer operator 32, the data conversion unit 34, the statistics acquisition unit 36 in FIG. 1, and various registers. Alternatively, each processing unit PE is an arithmetic unit including the integer operator 42, the data conversion unit 44, the statistics acquisition unit 46 in FIG. 1, and various registers. Note that circuit elements mounted on the processing unit PE are not limited to the above.

Although illustration is omitted, the arithmetic processing device 100 illustrated in FIG. 2 includes the instruction control unit 10, the register unit 20, the statistical information aggregation unit 50, and the memory interfaces 60 and 70 in FIG. 1. The main memory 214 includes, for example, a dynamic random access memory (DRAM), and corresponds to the instruction memory 216 and the data memory 218 of FIG. 1.

The host 220 includes a host CPU 224 and a memory 226 such as DRAM. The host CPU 224 is connected to the arithmetic processing device 100 via the PCIe interface circuit 222, and controls the arithmetic processing device 100 to cause the arithmetic processing device 100 to execute DNN learning.

For example, the host CPU 224 causes the arithmetic processing device 100 to execute DNN learning by executing an arithmetic processing program expanded in the memory 226. Furthermore, the host CPU 224 estimates the compression method that minimizes the data amount of the operation result data by executing the arithmetic processing program.

The host CPU 224 is connected to the hierarchically provided memory 226 and storage 230. For example, the storage 230 includes at least either a hard disk drive (HDD) or a solid state drive (SSD). Then, the host CPU 224 executes learning using learning data 232 stored in the storage 230 in DNN learning.

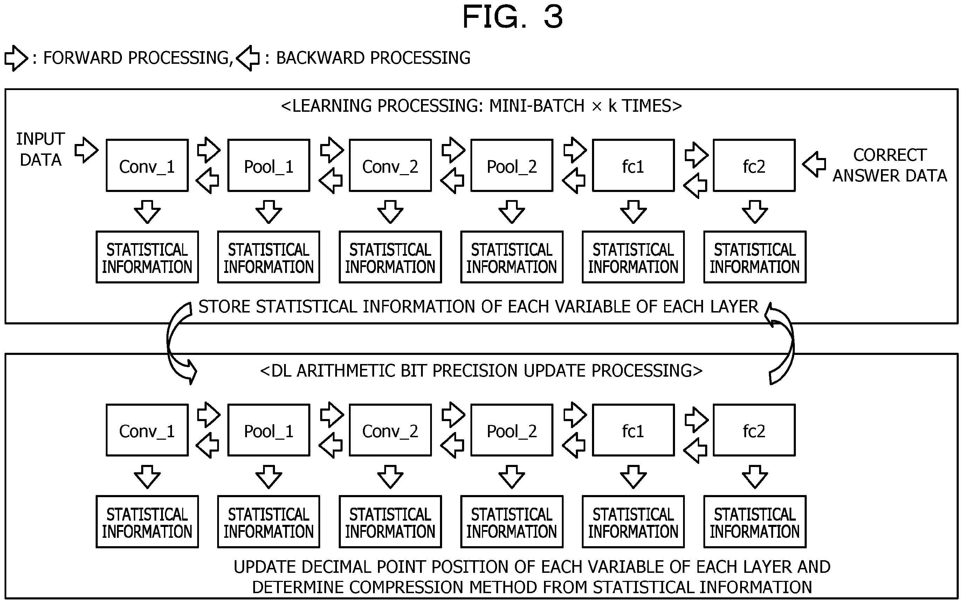

FIG. 3 is an explanatory diagram illustrating an outline of DNN learning by the server 200 of FIG. 2. The DNN illustrated in FIG. 3 includes a first convolution layer (Conv_1) and a first pooling layer (Pool_1), a second convolution layer (Conv_2) and a second pooling layer (Pool_2), a fully connected layer 1 (fc1), and a fully connected layer 2 (fc2).

For example, DNN deep learning is executed for each mini-batch, which is a unit of processing. The mini-batch is an example of a batch. In FIG. 3, the mini-batch is executed using each of the divided data obtained by dividing a set of input data to be learned into k pieces.

First, the host CPU 224 in FIG. 2 attempts learning with floating-point number data (for example, once of the mini-batch or the like) before executing the mini-batches and determines an initial decimal point position of each variable such as a weight used for learning. The initial decimal point position may be specified by a user. The host CPU 224 notifies the data conversion units 34 and 44 of the initial decimal point position.

Then, the host CPU 224 executes forward processing from the Conv_1 layer to the fc2 layer using the divided input data in each mini-batch. Furthermore, the host CPU 224 executes backward processing from the fc2 layer to the Conv_1 layer using a forward processing result and correct answer data in each mini-batch. The host CPU 224 then updates the variable such as a weight using, for example, a gradient descent method.

In each mini-batch, the statistical information aggregation unit 50 of FIG. 1 aggregates the position information of the most significant bit of each variable used in each layer acquired by the statistics acquisition unit 36 and stores the position information in the statistical information storage unit 22. The data (including the variable) used in each layer is read from the data memory 218 of FIG. 1, and data obtained by operation for each layer is stored in the data memory 218. In a case where a data overflow occurs during mini-batch learning, saturation processing is performed and learning is continued.

Note that, in the first k-times of mini-batches, the compression/decompression unit 72 of FIG. 1 stores the data in the data memory 218 without compressing the data. In the k times of mini-batches on and after the second round, the compression/decompression unit 72 compresses the data from the host CPU 224 by the specified compression method, stores the data in the data memory 218, and decompresses the data read from the data memory 218.

After the end of the k-times of mini-batches, the host CPU 224 determines the decimal point position of the fixed-point number data used in the next k-times of mini-batches, using the statistical information (frequency distribution data indicating the distribution of the positions of the most significant bits) stored in the statistical information storage unit 22. Furthermore, after the end of the k-times of mini-batches, the host CPU 224 determines the compression method to be used in the next k-times of mini-batches, using the statistical information stored in the statistical information storage unit 22. The host CPU 224 notifies the data conversion units 34 and 44 of the determined decimal point position, and notifies the compression/decompression unit 72 of the determined compression method. The data conversion units 34 and 44 update the decimal point position with the notified decimal point position. The compression/decompression unit 72 updates the compression method with the notified compression method.

Then, on or after the third round, the learning processing by the next k-times of mini-batches is repeatedly executed using the decimal point position and the compression method updated in the previous k-times of mini-batches. The learning processing is repeated until a difference from the correct answer data becomes equal to or less than a preset value.

By determining the compression method of the data to be stored in the data memory 218 using the statistical information stored in the statistical information storage unit 22 for each k-times of mini-batches, a transfer time of data to be read/write from/to the data memory 218 at the time of DNN learning can be reduced. In other words, the compression method that minimizes the transfer time of data to be read/write from/to the data memory 218 in the next k-times of mini-batches can be predicted using the statistical information stored in the statistical information storage unit 22.

FIG. 4 illustrates an example of updating a decimal point position of fixed-point number data during learning by the server 200 of FIG. 2. That is, in this embodiment, the DNN learning is performed using dynamic fixed-point number data. FIG. 4 illustrates an example of the distribution of the most significant bits of the data aggregated by the statistical information aggregation unit 50 and indicated by the statistical information stored in the statistical information storage unit 22.

The left side of FIG. 4 illustrates a case where the distribution does not fit in an expressible region, and the right side illustrates a case where the distribution fits in the expressible region. The numerical value on the horizontal axis of the distribution indicates the bit position (binary digit position) of the most significant bit. "15" indicates "2¹⁵" and "-3" indicates "2⁻³". Note that, in FIG. 4, the expressible region is illustrated by 16 bits, but the expressible region may be illustrated by 8 bits. The expressible region is an example of the bit range of fixed-point number data used for the operations of the integer operators 32 and 42. Hereinafter, the expressible region is also referred to as a bit range.

On the left side of FIG. 4, the saturation processing is executed for the fixed-point number data having the most significant bit of the bit value on an upper side of an upper limit of the expressible region (overflow). Meanwhile, the rounding processing is executed for the fixed-point number data having the most significant bit of the bit value on a lower side of a lower limit of the expressible region (underflow). The host CPU 224 determines that the distribution of the fixed-point number data represented by a current bit precision (Q5.10) is biased toward the upper side and determines the bit precision in the next learning processing to (Q3.12) on the basis of the distribution acquired by the statistical information aggregation unit 50.

Then, the host CPU 224 notifies the data conversion units 34 and 44 of the bit precision (Q3.12). For example, the host CPU 224 determines the decimal point position of the fixed-point number data such that the 16 bits indicated by the bit precision are located at the center of the distribution. Here, the bit precisions (Q5.10) and (Q3.12) indicate notation of the fixed-point number data in a Q format.

The host CPU 224 may update the decimal point position such that (the number of overflowing data)/(the total number of data) becomes smaller than a predetermined value. Alternatively, the host CPU 224 may update the decimal point position according to (the number of underflowing data)/(the total number of data), or may update the decimal point position on the basis of the number of overflowing data and the number of underflowing data or a ratio thereof.

Meanwhile, on the right side of FIG. 4, in the case where the distribution fits in the expressible region, the host CPU 224 determines the decimal point position such that the center of the distribution is located at the center of 16 bits indicated by the bit precision, for example. In the example illustrated in FIG. 4, the host CPU 224 determines that the distribution of the fixed-point number data represented by the current bit precision (Q3.12) is biased toward the upper side and determines the bit precision in the next learning processing to (Q1.14) on the basis of the distribution acquired by the statistical information aggregation unit 50.

FIG. 5 illustrates an example of data distribution in a layer in which many of operation results are "0" in the DNN learning by the arithmetic processing device 100 of FIG. 1. The example illustrated in FIG. 5 illustrates an example of converting a plurality of 24-bit data acci obtained by a product-sum operation into 8-bit fixed point numbers in a fully connected layer. The conversion to 8-bit fixed point numbers is executed by the data conversion unit 34 (or data conversion unit 44) in FIG. 1.

For example, the data conversion unit 34 is notified in advance of the bit position (Q-2.9) of the 8-bit fixed point numbers from the host CPU 224. The lower left of FIG. 5 illustrates an example of the distribution of the most significant bits of the product-sum operation result aggregated by the statistical information aggregation unit 50. The bits lower than the expressible region (Q-2.9) are underflow bits and undergo the rounding processing by the data conversion unit 34.

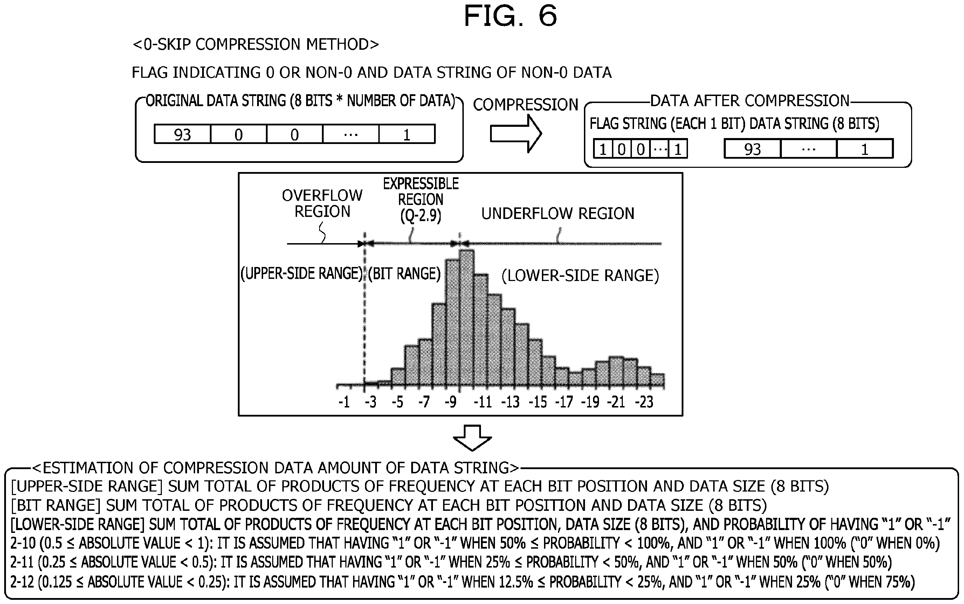

Note that the frequency distribution in FIG. 5 illustrates a distribution of absolute values of the data acci. Therefore, for example, the frequency at the bit position "-9" indicates the sum of the number of data of 2⁻⁸ ≤ accᵢ < 2⁻⁷ and the number of data of -2⁻⁷ ≤ accᵢ < -2⁻⁸. The frequency distributions illustrated in FIG. 6 and the subsequent drawings are also distributions of absolute values.

The right side of FIG. 5 illustrates an example of the distribution of the most significant bits after the underflow bits of each product-sum operation result data are rounded by the data conversion unit 34 and the data are converted into the 8-bit fixed point numbers. Many of the underflow data become "0" by round down and some become "2⁻⁹" by round up of probabilistic rounding processing. Therefore, as illustrated in the upper side of the right-side frame in FIG. 5, many of the data values (8-bit values) in (Q-2.9) after conversion are "0", and "1" and "-1" are also scattered.

FIG. 6 illustrates an example of the compression method of data to be compressed by the compression/decompression unit 72 of FIG. 1. The data after compression by the compression method illustrated in FIG. 6 includes a flag string and a data string. The flag string includes flags that indicate whether each data (8 bits) is "0" or "non-0". The number of flags is the same as the number of data in the original data string before compression. Each flag is 1 bit and is set to "1" when the corresponding data is "non-0" and to "0" when the corresponding data is "0".

The data string includes only 8-bit "non-0" operation result data with a sign bit. Hereinafter, the compression method illustrated in FIG. 6 is referred to as a 0-skip compression method. The 0-skip compression method is an example of a first compression method. Note that the size of the original data string is the product of 8 bits and the number of data. In the drawing, the sign "^{∗}" represents multiplication.

The host CPU 224 in FIG. 1 estimates the data amount of the compression data in the 0-skip compression method on the basis of the statistical information (the information illustrated by the frequency distribution in FIG. 6) aggregated by the statistical information aggregation unit 50. That is, the host CPU 224 can estimate the data amount of the compression data on the basis of the distribution of the positions of the most significant bits of the operation result data.

The host CPU 224 estimates a compressed data amount for each region, which is the data amount after compression, for each of an upper-side range on the upper bit side of the bit range (expressible region), the bit range, and a lower-side range on the lower bit side of the bit range. Then, the host CPU 224 sets a sum total of three compressed data amounts for each region as a compression data amount.

The host CPU 224 calculates the compressed data amount for each region in the upper-side range by adding the product of the frequency at each bit position in the upper-side range and the data size (8 bits). Similarly, the host CPU 224 calculates the compressed data amount for each region in the bit range by adding the product of the sum total of frequencies at each of the bit positions and the data size (8 bits).

The host CPU 224 calculates the compressed data amount for each region in the lower-side range according to the sum total of products of a probability of having "1" or "-1" for each bit position (digit position) by the rounding processing, and the frequency at each bit position. Here, having "1" or "-1" by the rounding processing indicates the round up of the rounding processing to a bit range.

For example, the host CPU 224 has "1" or "-1" with a probability of 50% to 100% (exclusive of 100%) at the bit position of 2⁻¹⁰, so the host CPU 224 estimates having "1" or "-1" with the probability of 100%. Since it is rounded up with the probability of 100%, the host CPU 224 calculates the compression data amount at the bit position 2⁻¹⁰ by the product of the frequency and the data size (8 bits).

The host CPU 224 has "1" or "-1" with a probability of 25% to 50% (exclusive of 50%) at the bit position of 2⁻¹¹, so the host CPU 224 estimates having "1" or "-1" with the probability of 50%. Therefore, the host CPU 224 calculates the compression data amount at the bit position 2⁻¹¹ by the product of the frequency, the data size (8 bits), and "0.5".

The host CPU 224 has "1" or "-1" with a probability of 12.5% to 25% (exclusive of 25%) at the bit position of 2⁻¹², so the host CPU 224 estimates having "1" or "-1" with the probability of 25%. Therefore, the host CPU 224 calculates the compression data amount at the bit position 2⁻¹¹ by the product of the frequency, the data size (8 bits), and "0.25".

The host CPU 224 calculates the data amount at the bit position of 2⁻¹³ and below, and sets the sum total of the data amount at all the bit positions of the operation result data in the lower-side range as the compressed data amount for each region in the lower-side range. Then, the host CPU 224 calculates the compression data amount in the 0-skip compression method by adding the size of the flag string (the product of the total number of data and 1 bit) to the sum total of the compressed data amounts for each region in the upper-side range, the bit range, and the lower-side range. In the 0-skip compression method, the higher the ratio of "0" in the operation result data, the higher the compression efficiency.

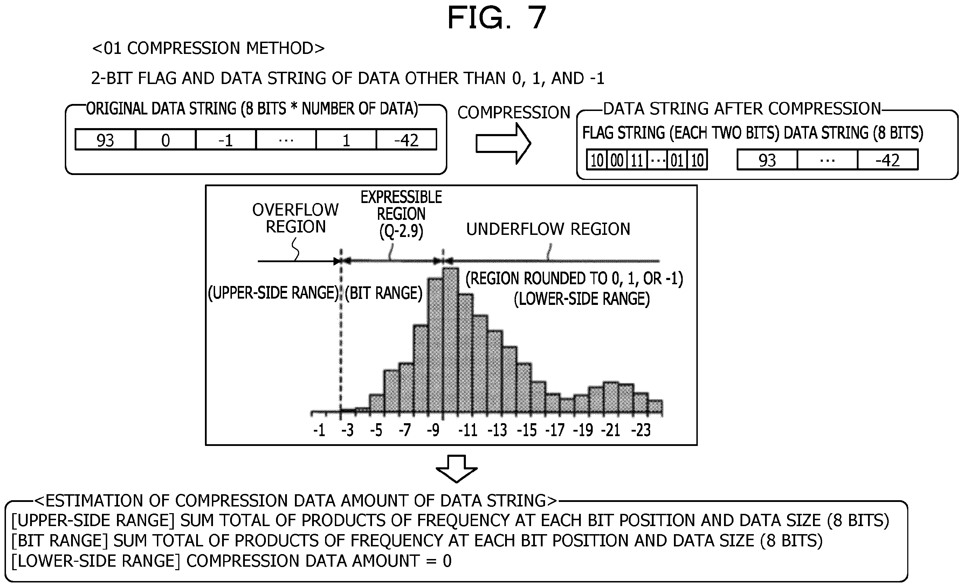

FIG. 7 is an explanatory diagram illustrating another example of the compression method of data to be compressed by the compression/decompression unit 72 of FIG. 1. Detailed description of elements similar to those in FIG. 6 is omitted. The data after compression by the compression method illustrated in FIG. 7 includes a flag string and a data string. The flag string is a flag indicating whether each data (8 bits) is one of "0", "1", or "-1", or none of "0", "1", and "-1". The number of flags is the same as the number of data in the original data string before compression. Each flag is 2 bits and is set to "00" when the corresponding data is "0" and to "01" when the corresponding data is "1". Furthermore, each flag is set to "11" when the corresponding data is "-1" and to "10" when the corresponding data is none of "0", "1", and "-1".

The data string includes 8-bit operation result data with a sign bit that is none of "0", "1", and "-1". Hereinafter, the compression method illustrated in FIG. 7 is referred to as 01 compression method. The 01 compression method is an example of a second compression method.

The host CPU 224 estimates the data amount of the compression data in the 01 compression method on the basis of the statistical information (the information illustrated by the frequency distribution in FIG. 7) aggregated by the statistical information aggregation unit 50. That is, the host CPU 224 can estimate the data amount of the compression data on the basis of the distribution of the positions of the most significant bits of the operation result data.

The host CPU 224 estimates the compressed data amount for each region, which is the data amount after compression, for each of the upper-side range, the bit range, and the lower-side range. Then, the host CPU 224 sets the sum total of three compressed data amounts for each region as a compression data amount.

The host CPU 224 calculates the compressed data amount for each region in the upper-side range by adding the product of the frequency at each bit position and the data size (8 bits), similarly to FIG. 6. Similarly, the host CPU 224 calculates the compressed data amount for each region in the bit range by adding the product of the frequency at each bit position and the data size (8 bits).

In FIG. 7, the data in the lower-side range rounded to any of "0", "1", and "-1" is represented by the flag in the flag string. Therefore, the host CPU 224 sets the compressed data amount for each region in the lower-side range to "0". Then, the host CPU 224 calculates the compression data amount in the 01 compression method by adding the size of the flag string (the product of the total number of data and 2 bits) to the sum total of the compressed data amounts for each region in the upper-side range and the bit range. In the 01 compression method, the higher the ratio of "0", "1", and "-1" in the operation result data, the higher the compression efficiency.

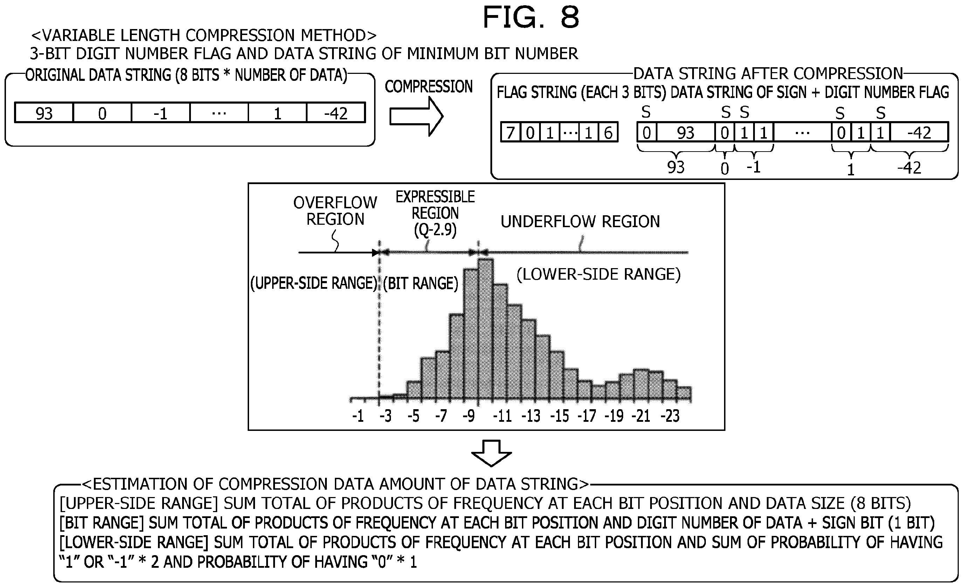

FIG. 8 is an explanatory diagram illustrating still another example of the compression method of data to be compressed by the compression/decompression unit 72 of FIG. 1. Detailed description of elements similar to those in FIG. 6 is omitted. The data after compression by the compression method illustrated in FIG. 8 includes a flag string and a data string. The flag string includes a flag in which the bit number representing each operation result data (7 bits in the bit range excluding the sign bit) is set. In other words, each flag indicates the bit number up to the most significant bit within the bit range of each operation result data.

The number of flags is the same as the number of data in the original data string before compression. Each flag is 3 bits because each flag indicates the bit width of data from "0" to "127 (absolute value)" that can be expressed in the bit range (7 bits).

The data string includes a pair of data of the bit width indicated by the flag and the sign bit of each data. For example, the data "93" is represented by a sign bit S of "0" and the 7-bit "93". The data "0" is represented only by the sign bit S of "0". The data "-1" is represented by the sign bit S of "1" and the 1-bit "1". The data "1" is represented by the sign bit S of "0" and the 1-bit "1". The data "42" is represented by the sign bit S of "0" and the 6-bit "42". Hereinafter, the compression method illustrated in FIG. 8 is referred to as a variable length compression method. The variable length compression method is an example of a third compression method.

The host CPU 224 estimates the data amount of the compression data in the variable length compression method on the basis of the statistical information (the information illustrated by the frequency distribution in FIG. 8) aggregated by the statistical information aggregation unit 50. That is, the host CPU 224 can estimate the data amount of the compression data on the basis of the distribution of the positions of the most significant bits of the operation result data.

The host CPU 224 estimates the data amount after compression for each of the upper-side range, the bit range, and the lower-side range. Then, the host CPU 224 sets the sum total of three compressed data amounts for each region as a compression data amount.

The host CPU 224 calculates the compressed data amount for each region in the upper-side range by adding the product of the frequency at each bit position and the data size (8 bits), similarly to FIG. 6. Furthermore, the host CPU 224 calculates the compressed data amount for each region in the bit range by adding the product of the frequency at each bit position and a sum of the number of digits of the data and a sign bit number (= "1") that is the bit number of the sign bit.

In the frequency distribution illustrated in FIG. 8, the number of digits of the data is "7" at the bit position of 2⁻³, "5" at the bit position of 2⁻⁵, and "3" at the bit position of 2⁻⁷, and "1" at the bit position of 2⁻⁹.

The host CPU 224 calculates the compressed data amount for each region in the lower-side range on the basis of the probability of having "-1" or "1" by the rounding processing (round up) and the probability of having "0" by the rounding processing (round down) at each bit position. For example, the host CPU 224 calculates the sum of twice the probability of having "1" or "-1" and one time the probability of having "0" for each bit position. Then, the host CPU 224 calculates the compressed data amount for each region in the lower-side range by adding the product of the calculated sum for each bit position and the frequency at each bit position.

Here, in the data string after compression, "1" or "-1" is expressed by 2 bits including the sign bit S, so the probability of having "1" or "-1" is doubled. In the data string after compression, "0" is expressed by 1 bit of the sign bit S only, so the probability of having "0" is multiplied by 1. In the variable length compression method, the higher the ratio of a value that is none of "0", "1", and "-1" in the operation result data, the higher the compression efficiency.

Note that the compression methods illustrated in FIGs. 6 to 9 are examples. The compression method used in the present embodiment is not limited to the above three methods. Furthermore, types of the compression method may be two or more.

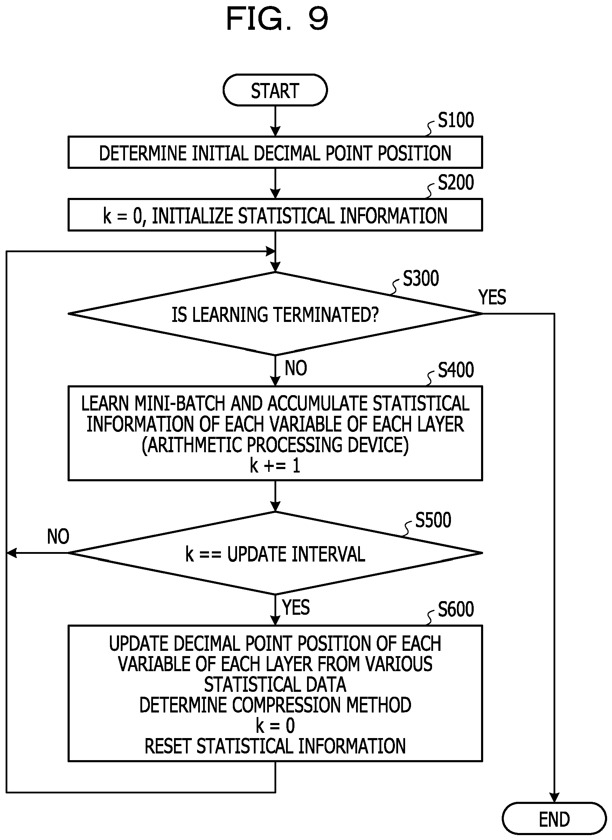

FIG. 9 illustrates an example of DNN learning by the server 200 of FIG. 2. For example, the processing flow illustrated in FIG. 9 is implemented by the host CPU 224 of the server 200 executing an arithmetic processing program. That is, FIG. 9 illustrates an example of an arithmetic processing method and an example of an arithmetic processing program executed by the server 200.

Note that the processing flow illustrated in FIG. 9 may be implemented by hardware such as field-programmable gate array (FPGA) or may be implemented by hardware and software in cooperation.

First, in step S100, the host CPU 224 determines the initial decimal point position, which is the initial value of the decimal point position. The host CPU 224 may determine the initial decimal point position of each variable by past experimental values, actual values, or user specification.

Next, in step S200, the host CPU 224 initializes the number of repetitions k of the mini-batch to "0". Furthermore, the host CPU 224 initializes the variables that store the statistical information in the arithmetic processing program.

Next, in step S300, the host CPU 224 determines whether a condition for terminating learning is satisfied. The host CPU 224 terminates learning when, for example, an error in the fully connected layer (fc2) illustrated in FIG. 3 becomes equal to or less than a preset reference value, or when the number of learnings reaches a predetermined number of times. In the case where the condition for terminating learning is not satisfied, the host CPU 224 executes step S400 to execute the next mini-batch.

In step S400, the host CPU 224 causes the arithmetic processing device 100 to execute mini-batch learning, and accumulates the statistical information of each variable of each layer in the statistical information storage unit 22. Then, the host CPU 224 increases the number of repetitions k by "1" on the basis of completion of mini-batch learning, and executes step S500.

In step S500, the host CPU 224 determines whether the number of repetitions k has reached an update interval between the decimal point position of the fixed-point number data and the compression method. In the case where the number of repetitions k has not reached the update interval, the host CPU 224 returns to the processing of step S300, and in the case where the number of times k has reached the update interval, the host CPU 224 executes step S600.

In step S600, the host CPU 224 reads the statistical information accumulated in the statistical information storage unit 22 by executing the mini-batch. Then, the host CPU 224 updates the decimal point position of each variable of each layer as described with reference to FIG. 4 on the basis of the read statistical information. Furthermore, the host CPU 224 determines the compression method (one of the compression methods described in FIGs. 6 to 8 or non-compression) to be adopted in the next k-times of mini-batches every time k-times of mini-batches are executed. The host CPU 224 initializes the number of repetitions k to "0" and resets a storage area of the statistical information storage unit 22 or the like that stores the statistical information. Then, the host CPU 224 returns to the processing of step S300.

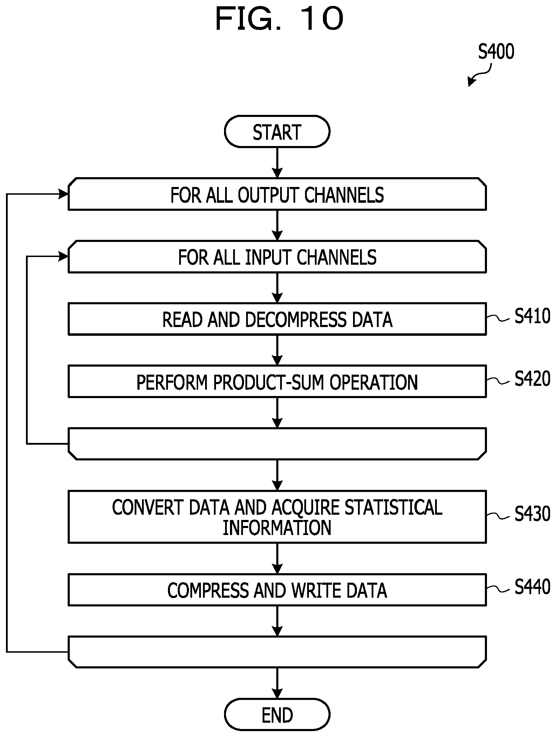

FIG. 10 illustrates an example of mini-batch learning executed in step S400 of FIG. 9. The processing illustrated in FIG. 10 is executed by the arithmetic processing device 100 on the basis of control by the host CPU 224. The arithmetic processing device 100 executes processing of steps S410 and S420 in the combination of all of input channels and all of output channels of the DNN on the basis of the instruction from the host CPU 224.

In step S410, the memory interface 70 reads the data (compressed operation result data) from the data memory 218. The compression/decompression unit 72 decompresses the data read from the data memory 218 and transfers the data to the register unit 20. For example, the memory interface 70 reads method information indicating the compression method from the data memory 218 together with the compression data. Then, the compression/decompression unit 72 decompresses the data corresponding to the compression method indicated by the method information read from the data memory 218. Next, in step S420, the integer operator 32 (or 42) executes the product-sum operation using the data stored in the register unit 20.

Next, in step S430, the data conversion unit 34 (or 44) changes the bit precision, which is the effective bit range of the data obtained by the product-sum operation, and executes the saturation processing and the rounding processing for the bit values outside the expressible effective range. For example, the data conversion unit 34 (or 44) changes the bit precision by using the operation result data stored in the register or the like.

Furthermore, the statistical information aggregation unit 50 acquires the statistical information (the position information indicating the position of the most significant bit) of the data obtained in the product-sum operation and acquired by the statistics acquisition unit 36 (or 46). The data to be processed by the data conversion unit 34 (or 44) and the statistics acquisition unit 36 (or 46) is result data of the product-sum operation for each of the output channels for all the input channels.

Next, in step S440, the memory interface 70 compresses the data with the effective bit range changed by the data conversion unit 34 (or 44), using the compression/decompression unit 72. For example, the compression/decompression unit 72 compresses the data using the compression method instructed by the host CPU 224. The host CPU 224 notifies the compression/decompression unit 72 of the compression method determined by the previous k-times of mini-batches in advance. For example, the memory interface 70 writes the compression data to the data memory 218 together with the method information indicating the compression method. Then, the product-sum operation processing for each input channel in steps S410 and S420, the data conversion processing for each output channel in steps S430 and S440, the statistical information acquisition processing, and the data compression processing are repeatedly executed.

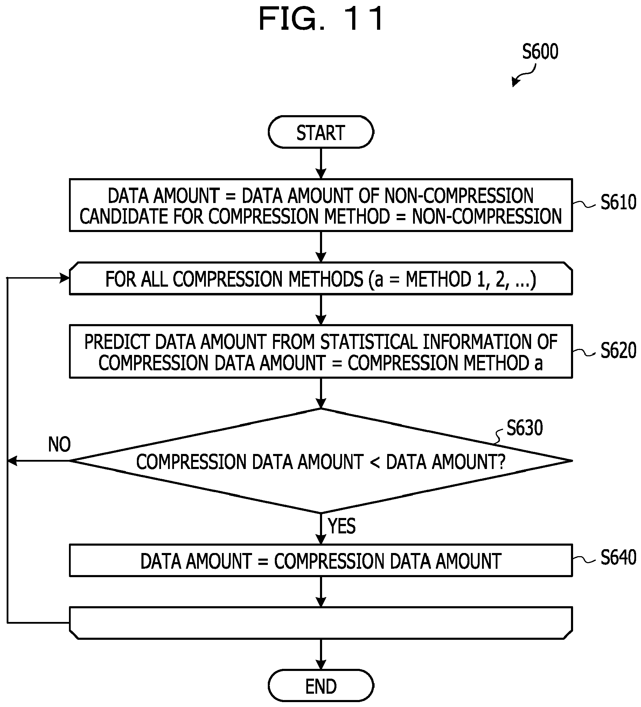

FIG. 11 illustrates an example of the determination method for a compression method executed in step S600 of FIG. 9. The host CPU 224 that executes the processing illustrated in FIG. 11 is an example of a compression method determination unit.

First, in step S610, the host CPU 224 sets the data amount of the operation result data (uncompressed) in the k-times of mini-batch learning to the initial data amount, and selects non-compression as a candidate for the initial compression method. Then, the host CPU 224 sequentially predicts the compression data amount by all the compression methods by executing the processing of steps S620, S630, and S640, and determines the compression method with the smallest compression data amount as the compression method to be used for the next k-times of mini-batch learning. For example, a compression method a is one of the 0-skip compression method, the 01 compression method, or the variable length compression method illustrated in FIGs. 6 to 8.

In step S620, the host CPU 224 predicts the compression data amount in the case of using one of the compression methods. Next, in step S630, the host CPU 224 determines whether the compression data amount predicted in step S620 is smaller than the data amount. Here, the data amount to be compared is the data amount of non-compression set in step S610 in the first processing loop, and is the data amount determined in step S640 in the second or subsequent processing loop. In the case where the compression data amount is smaller than the data amount, the host CPU 224 executes the processing of step S640, and in the case where the compression data amount is equal to or larger than the data amount, the host CPU 224 returns to step S620 and predicts the compression data amount in the next compression method.

In step S640, the host CPU 224 sets the compression data amount predicted in step S620 to the data amount to be compared in the subsequent processing loop. Furthermore, the host CPU 224 sets the compression method predicted in step S620 as a candidate for the compression method. Then, the host CPU 224 determines the compression method remaining as a candidate for the compression method as the method to be used in the next k-times of mini-batches after completion of prediction of the compression data amount by all the compression methods, and terminates the processing in FIG. 11.

By repeatedly executing steps S620 to S640 for each compression method, the compression method with the minimum compression data amount in all the compression methods is selected. Note that, in the case where the compression data amount in each compression method is equal to or larger than the data amount of non-compression, step S640 is never executed and non-compression is selected as a candidate for the compression method. In the case of compressing the operation result data by a fixed compression method, the operation result data is always compressed regardless of high or low compression efficiency. In this embodiment, since one of the plurality of compression methods or non-compression can be selected according to the compression data amount, a method having a small data amount, including non-compression, can be selected. That is, it is possible to avoid selection of a compression method having lower compression efficiency than non-compression.

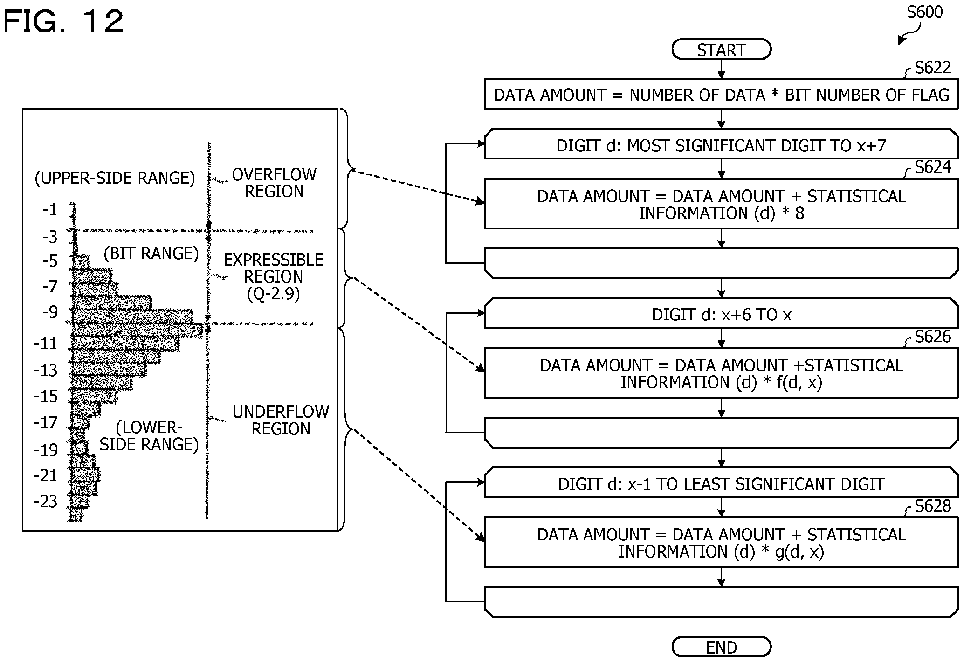

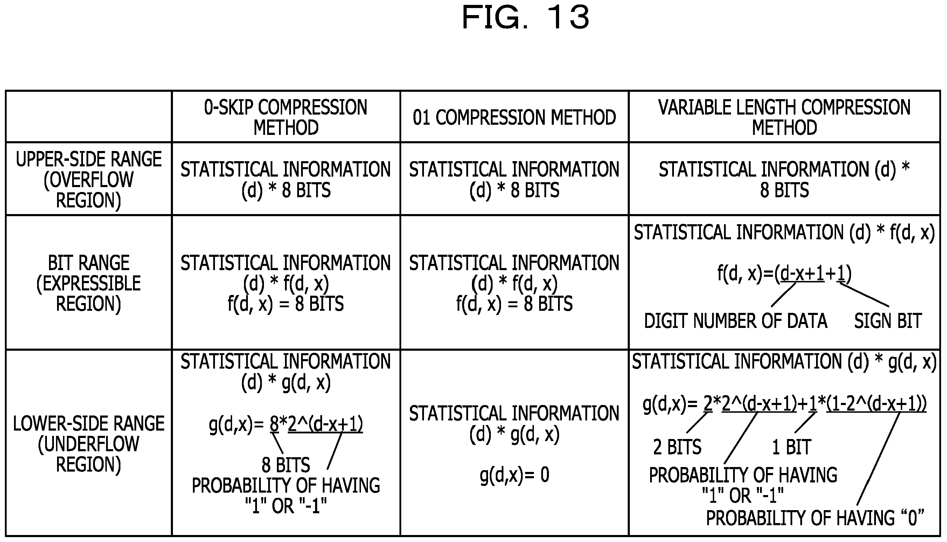

FIG. 12 illustrates an example of a method of predicting a compression data amount executed in step S620 of FIG. 11. FIG. 13 illustrates an example of the compression data amount calculated for each digit in a case of predicting the compression data amount in each region of FIG. 12. The processing illustrated in FIG. 12 is executed by the host CPU 224 for each compression method. In FIGs. 12 and 13, a digit d represents the bit position of the most significant bit such as "-9" (2⁻⁹) or "-11" (2⁻¹¹), and "x" is "-9" (the position of the least significant bit in the bit range).

First, in step S622, the host CPU 224 calculates the product of the number of data of the operation result data in the k times of mini-batch learning and the number of flag bits, and sets the product as the initial data amount to which the subsequent data amount is to be added. The number of flag bits is 1 bit in the 0-skip compression method of FIG. 6, 2 bits in the 01 compression method of FIG. 7, and 3 bits in the variable length compression method of FIG. 8.

In step S624, the host CPU 224 estimates the compressed data amount for each region in the upper-side range by calculating and accumulating the data amount for each digit from the most significant digit to x+7 digits (= -2). The processing in step S624 is common to the 0-skip compression method, the 01 compression method, and the variable length compression method. The host CPU 224 sequentially adds the product of the statistical information (d), which is the frequency (number of data) in the digit d, and 8 bits while updating the digit d as the data amount.

In step S626, the host CPU 224 calculates the data amount for each digit from x+6 digit (= -3) to x digit (= -9) and adds the data amount to the data amount accumulated in step S624. In step S626, the sum of the compressed data amount for each region in the upper-side range and the compressed data amount for each region in the bit range is estimated.

The host CPU 224 sequentially adds the product of the statistical information (d), which is the frequency of the digit d, and f(d, x) in each of the 0-skip compression method, the 01 compression method, and the variable length compression method while updating the digit d. f(d, x) is common to the 0-skip compression method and the 01 compression method, and is different in the variable length compression method from the 0-skip compression method and the 01 compression method.

In the 0-skip compression method and the 01 compression method, f(d, x) is set to "8". In the variable length compression method, f(d, x) is set to "d - x + 1 + 1". In "d - x + 1 + 1", "d - x + 1" indicates the number of digits of data, and the last "1" indicates the sign bit. Therefore, in the variable length compression method, for example, f(d, x) is set to "8" at the digit d = -3, "6" at the digit d = -5, and "2" at the digit d = -9.

In step S628, the host CPU 224 calculates the data amount for each digit from x-1 digit (= -10) to the least significant digit and adds the data amount to the data amount accumulated in step S626. In step S628, the host CPU 224 sequentially adds the product of the statistical information (d), which is the frequency of the digit d, and g(d, x) in each of the 0-skip compression method, the 01 compression method, and the variable length compression method while updating the digit d. Note that g(d, x) is different in the 0-skip compression method, the 01 compression method, and the variable length compression method.

In the 0-skip compression method, g(d, x) is set to "8^{∗}2^(d - x + 1)". The sign "^" represents a power. "8" in g(d, x) indicates that each data is 8 bits, and "2^(d - x + 1)" indicates the probability of data having "1" or "-1". The probability is set to "2^0 = 1 (= 100%)" at the digit d = -10, "2^-1 = 0.5 (= 50%)" at the digit d = - 11, and "2^-2 = 0.25 (= 25%) at the digit d = -12, as illustrated in FIG. 6.

In the 01 compression method, as illustrated in FIG. 7, since the data in the lower-side range does not exist as a data string after compression, g(d, x) is set to "0".

In the variable length compression method, g(d, x) is set to "2^{∗}2^(d - x + 1) + 1^{∗}(1 - 2^(d - x + 1)". The leading "2" indicates 2 bits, and "2^(d - x + 1)" indicates the probability of data of having "1" or "-1". The leading "1" of "1^{∗}(1 - 2^(d - x + 1)" indicates 1 bit, and "(1 - 2^(d -x + 1)" indicates the probability of having "0".

Note that the order of processing steps S624, S626, and S628 is arbitrary. Furthermore, only the compressed data amount for each region in the upper-side range may be accumulated in step S624, only the compressed data amount for each region in the bit range may be accumulated in step S626, and only the compressed data amount for each region in the lower-side range may be accumulated in step S628. Then, after step S628, the data amount in the flag string calculated in step S622 and the compressed data amount for each region accumulated in each of steps S624, S626, and S628 may be added to each other.

By compressing the middle layer data of DNN training and storing the compressed data in the data memory 218, and decompressing the data read from the data memory 218 to the original data, the data transfer amount to the data memory 218 can be reduced. As a result, in DNN learning, the wait time can be reduced in the operator, the operation efficiency is improved, and the learning time can be shortened. That is, by improving the compression efficiency of data used for learning the deep neural network to be transferred to the memory, the learning time can be reduced.

By providing the compression/decompression unit 72 in the memory interface 70 located near the data memory 218, both the operation result data output from the vector unit 30 and the operation result data output from the scalar unit 40 can be compressed. Furthermore, the compression/decompression unit 72 can be mounted in the arithmetic processing device 100 without separating the unit into a compression unit and a decompression unit. As a result, a wiring region such as data lines related to data compression and decompression can be minimized, and a circuit scale of the arithmetic processing device 100 can be minimized.

By determining the compression method for the data to be stored in the data memory 218 using the statistical information stored in the statistical information storage unit 22 for each predetermined amount of learning, the compression method that minimizes the transfer time of data to the data memory 218 in the next predetermined amount of learning can be predicted. Since one of the plurality of compression methods or non-compression can be selected according to the compression data amount, it is possible to select a method having a small data amount, including non-compression. That is, it is possible to avoid selection of a compression method having lower compression efficiency than non-compression.

Since the compression method that is expected to minimize the compression data amount can be selected from the plurality of compression methods, the optimum compression method estimated to minimize the compression data amount can be adopted in the next k-times of mini-batches according to the characteristics of the compression data that changes for each k-times of mini-batches.

For example, in the 0-skip compression method, the higher the ratio of "0" in the operation result data, the higher the compression efficiency. In the 01 compression method, the higher the ratio of "0", "1", and "-1" in the operation result data, the higher the compression efficiency. In the variable length compression method, the higher the ratio of a value that is none of "0", "1", and "-1" in the operation result data, the higher the compression efficiency.

By mounting the compression/decompression unit 72 on the memory interface 70, the common compression/decompression unit 72 can efficiently compress and decompress the operation result data even in the case of providing the plurality of integer operators 32 and 42.

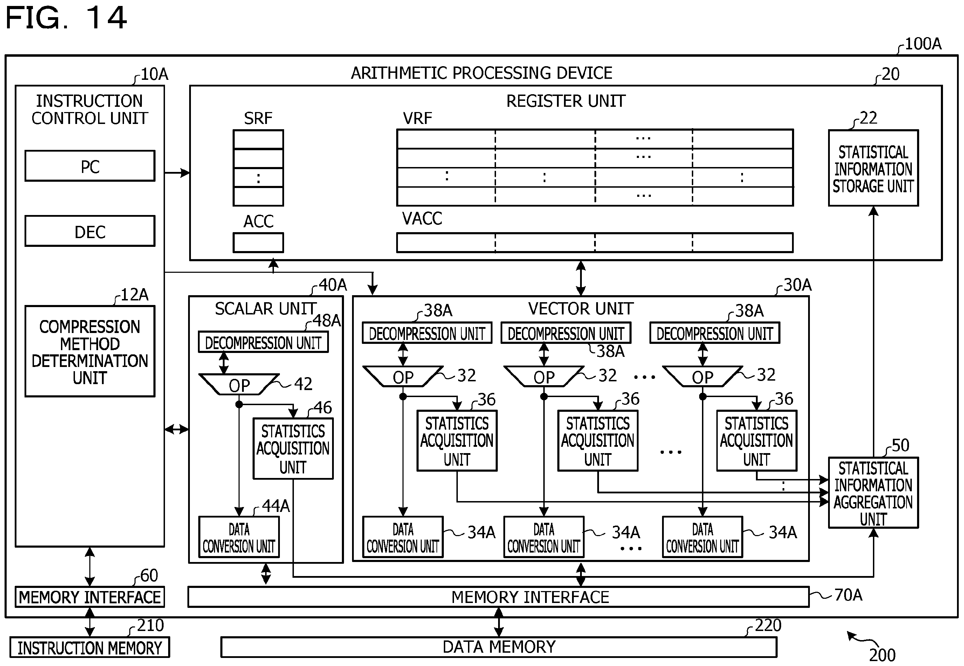

FIG. 14 illustrates an example of an arithmetic processing device according to another embodiment. Elements similar to those in FIG. 1 are given the same reference signs, and detailed description is omitted. The arithmetic processing device 100A illustrated in FIG. 14 includes an instruction control unit 10A, a vector unit 30A, a scalar unit 40A, and a memory interface 70A instead of the instruction control unit 10, the vector unit 30, the scalar unit 40, and the memory interface 70 illustrated in FIG. 1.

The instruction control unit 10A has similar configuration and function to the instruction control unit 10 of FIG. 1 except that the instruction control unit 10A includes a compression method determination unit 12A. The vector unit 30A has similar configuration and function to the vector unit 30 of FIG. 1 except that the vector unit 30A has a data conversion and compression unit 34A instead of the data conversion unit 34 of FIG. 1 and moreover, newly has a decompression unit 38A.

The scalar unit 40A has similar configuration and function to the scalar unit 40A of FIG. 1 except that the scalar unit 40A has a data conversion and compression unit 44A instead of the data conversion unit 44 of FIG. 1 and newly has a decompression unit 48A. The memory interface 70A has similar configuration and function to the memory interface 70 of FIG. 1 except that the memory interface 70A does not have the compression/decompression unit 72.

The compression method determination unit 12A executes the processing of determining a compression method illustrated in FIGs. 11 to 13 instead of the server 200 illustrated in FIG. 2. Therefore, among processing executed by a host CPU 224 illustrated in FIG. 9, the processing of determining a compression method in step S600 is executed by the compression method determination unit 12A.

A server on which the arithmetic processing device 100A is mounted has similar configuration and function to the server 200 illustrated in FIG. 2, except that the server does not execute the processing of determining a compression method. That is, in this embodiment, the server 200 illustrated in FIG. 2 includes the arithmetic processing device 100A instead of the arithmetic processing device 100. Similarly to FIG. 2, the arithmetic processing device 100A includes a plurality of processing units PE arranged in a matrix manner and is connected to a main memory 214.

Note that the compression method determination unit 12A may be provided at another location in the arithmetic processing device 100A as long as statistical information stored in a statistical information storage unit 22 can be referred to. Furthermore, in FIG. 14, the memory interface 70 illustrated in FIG. 1 may be provided instead of the memory interface 70A. In this case, the decompression units 38A and 48A are deleted, and the data conversion units 34 and 44 illustrated in FIG. 1 are provided in place of the data conversion and compression units 34A and 44A. Moreover, in FIG. 14, the compression method determination unit 12A may be deleted, and the processing of determining a compression method may be executed by the host CPU 224 of the server 200 in FIG. 2.

As described above, in this embodiment, effects similar to those of the above-described embodiment can be obtained. For example, by compressing middle layer data of DNN training and reading/writing the data to/from a data memory 218, the data transfer amount to the data memory 218 can be reduced and the learning time of the DNN can be shortened. That is, by improving the compression efficiency of data used for learning the deep neural network to be transferred to the memory, the learning time can be reduced.

Moreover, in this embodiment, the compression method can be determined in the arithmetic processing device 100A by providing the compression method determination unit 12A in the arithmetic processing device 100A. As a result, the communication amount and the communication time between the arithmetic processing device 100A and the host 220 (FIG. 2) for determining the compression method can be reduced as compared with the above-described embodiment, and the learning time of the DNN can be further shortened.

## Claims

1. An arithmetic processing device comprising:
an arithmetic unit that executes an operation of fixed-point number data;
a statistics acquisition unit that acquires statistical information that indicates a distribution of positions of most significant bits of a plurality of fixed-point number data obtained by the operation;
an update unit that updates, based on the statistical information, a range for restriction of bit width of the plurality of fixed-point number data to be used for the operation;
a compression method determination unit that
estimates respective data amount after compression of the plurality of fixed-point number data by a plurality of compression methods based on the statistical information, and
determine a compression method by which data amount after compression of the plurality of fixed-point number data is minimum among plurality of compression methods; and
a memory interface that transfers the plurality of fixed-point number data compressed by the compression method to a memory.

2. The arithmetic processing device according to claim 1, wherein
the statistics acquisition unit further that acquires the statistical information for each execution of a certain number of batches in the deep neural network learning, and
the compression method determination unit further that determines the compression method based on the statistical information used for compression of the operation result data of a plurality of fixed-point number data of a next certain number of batches to the certain number of batches.

3. The arithmetic processing device according to claim 1 or 2, wherein the memory interface further that transfers information that indicates the compression method used for compression of the plurality of fixed-point number data with the plurality of fixed-point number data compressed to the memory.

4. The arithmetic processing device according to any one of claims 1 to 3,
wherein the compression method determination unit further that determines non-compression as the compression method when the respective data amount after compression of the plurality of fixed-point number data by a plurality of compression methods are equal to or larger than a data amount of the operation result data before compression.

5. The arithmetic processing device according to any one of claims 1 to 4,
wherein arithmetic processing device further comprising a compression/decompression unit that
compresses the plurality of fixed-point number data by the compression method, and
decompresses the plurality of fixed-point number data compressed.

6. The arithmetic processing device according to any one of claims 1 to 5, wherein
the plurality of compression methods includes a first compression method that generates a flag string including a flag that indicates whether each of the plurality of fixed-point number data is either 0 or non-0 in the bit range, and a data string including only the plurality of fixed-point number data of non-0, wherein
the compression method determination unit further that
when data amount after compression of the plurality of fixed-point number data by the first compression method,
estimates a compressed data amount for each region after compression of the plurality of fixed-point number data plurality of fixed-point number data for each of the bit range, an upper-side range that deviates toward an upper bit side of the bit range, and a lower-side range that deviates toward a lower bit side of the bit range,
sets a sum total of the compressed data amounts for each region as the data amount after compression of the plurality of fixed-point number data, and
estimates the compressed data amount for each region in the lower-side range based on a product of a frequency at each bit position in the lower-side range and a probability rounded up by rounding processing.

7. The arithmetic processing device according to any one of claims 1 to 5, wherein
the plurality of compression methods includes a second compression method that generates a flag string including a flag that indicates whether each of the plurality of fixed-point number data is one of 0, 1, or -1, or none of 0, 1, and -1, and a data string including only the plurality of fixed-point number data of none of 0, 1, and -1, wherein
the compression method determination unit further that
when data amount after compression of the operation result data by the second compression method,
estimates a compressed data amount for each region after compression of the plurality of fixed-point number data for each of the bit range, an upper-side range that deviates toward an upper bit side of the bit range, and a lower-side range that deviates toward a lower bit side of the bit range,
sets a sum total of the compressed data amounts for each region as the data amount after compression of the plurality of fixed-point number data, and
estimates the compressed data amount for each region in the lower-side range as 0.

8. The arithmetic processing device according to any one of claims 1 to 5, wherein
the plurality of compression methods includes a third compression method that generates a flag string including a flag that indicates a bit number up to a most significant bit in the bit range in each of the plurality of fixed-point number data, and a data string including the operation result data of the bit number indicated by the flag and a sign bit, wherein
the compression method determination unit further that
when data amount after compression of the operation result data by the third compression method,
estimates a compressed data amount for each region after compression of the operation result data for each of the bit range, an upper-side range that deviates toward an upper bit side of the bit range, and a lower-side range that deviates toward a lower bit side of the bit range,
sets a sum total of the compressed data amounts for each region as the data amount after compression of the operation result data,
estimates the compressed data amount for each region in the bit range based on a product of a frequency at each bit position in the bit range and a sum of the bit number and a sign bit number, and
estimates the compressed data amount for each region in the lower-side range based on a product of a frequency at each bit position in the lower-side range and a sum of twice a probability of being rounded up by rounding processing and a probability of being rounded down by the rounding processing.

9. The arithmetic processing device according to any one of claims 1 to 8, wherein the update unit further that
determines a first number of fixed-point number data of the plurality of fixed-point number data whose most significant bit is to be out of the range, based on the statistical information, and
changes the range so that a ratio of the first number to a second number of the plurality of fixed-point number data is less than a certain value.

10. An arithmetic processing method for a computer to execute a process comprising:
executing an operation of fixed-point number data;
acquiring statistical information that indicates a distribution of positions of most significant bits of a plurality of fixed-point number data obtained by the operation;
updating, based on the statistical information, a range for restriction of bit width of the plurality of fixed-point number data to be used for the operation;
estimating respective data amount after compression of the plurality of fixed-point number data by a plurality of compression methods based on the statistical information;
determining a compression method by which data amount after compression of the plurality of fixed-point number data is minimum among plurality of compression methods;
transferring the plurality of fixed-point number data compressed by the compression method to a memory; and
executing deep neural network learning by using the plurality of fixed-point number data compressed by the compression method.

11. The arithmetic processing method according to claim 10, wherein the process further comprising:
acquiring the statistical information for each execution of a certain number of batches in the deep neural network learning, and
determining the compression method based on the statistical information used for compression of the operation result data of a plurality of fixed-point number data of a next certain number of batches to the certain number of batches.

12. The arithmetic processing method according to claim 10 or 11, wherein the transferring includes transferring information that indicates the compression method used for compression of the plurality of fixed-point number data.

13. The arithmetic processing method according to any one of claims 10 to 12, wherein the determining includes determining non-compression as the compression method when the respective data amount after compression of the plurality of fixed-point number data by a plurality of compression methods are equal to or larger than a data amount of the operation result data before compression.

14. The arithmetic processing method according to any one of claims 10 to 13, wherein the process further comprising decompressing the plurality of fixed-point number data.

15. An arithmetic processing program that causes at least one computer to execute a process, the process comprising:
executing an operation of fixed-point number data;
acquiring statistical information that indicates a distribution of positions of most significant bits of a plurality of fixed-point number data obtained by the operation;
updating, based on the statistical information, a range for restriction of bit width of the plurality of fixed-point number data to be used for the operation;
estimating respective data amount after compression of the plurality of fixed-point number data by a plurality of compression methods based on the statistical information;
determining a compression method by which data amount after compression of the plurality of fixed-point number data is minimum among plurality of compression methods;
transferring the plurality of fixed-point number data compressed by the compression method to a memory; and
executing deep neural network learning by using the plurality of fixed-point number data compressed by the compression method.
